# EUROPEAN PATENT APPLICATION

(11) **EP 2 660 405 A1**
(43) Date of publication of application: **06.11.2013**
(21) Application number: 11852434.7
(22) Date of filing: 12.12.2011
(51) Int. Cl.: E04B 1/80, E04C 2/52

(54) **CERAMIC THERMAL CONDITIONING PANEL**

(30) Priority: 28.12.2010 ES 201001626
(71) Applicant: Universidad De Alicante, 03690 Alicante (ES); Ascer (Asociacion Española de Fabricantes de Azulejos Y Pavimentos Ceramicos), 12003 Castellón (ES); Asociación De Investigación De Las Industrias Cerámicas (AICE), 12006 Castellón (ES)
(72) Inventor: ECHARRI IRIBARREN, Víctor, E-03690 Alicante (ES); UVIEDO RAMOS, Elena, E-12003 Castellón (ES); LÁZARO MAGDALENA, Vicente Antonio, E-12006 Castellón (ES)
(74) Representative: Temino Ceniceros, Ignacio
(86) International application number: PCT/ES2011/070849
(87) International publication number: WO 2012/089877

(57) **Abstract**

The invention relates to a ceramic thermal conditioning panel for thermal conditioning of spaces by radiant surfaces on roofs and walls, which includes a multi-layer structure consisting of a thin ceramic piece of porcelain clay with a capillary section of small-diameter polypropylene or copper pipes connected to water distribution pipes. The invention additionally relates to incorporating an adhesive interface for attaching the capillary section of polypropylene or copper pipes to the ceramic piece. Likewise, said panel can include a layer of thermal insulation (rigid or flexible, as needed). Said panels may also be constructed of larger pieces. The structure of the panel would be similar to the aforementioned, but it would be necessary to include a butyral adhesive between the two large ceramic pieces. Another option would be to use large, vertically arranged pieces.

## Description

### OBJECT OF THE INVENTION

The present invention refers to a ceramic thermal conditioning panel which can be used on roofs or walls, which incorporates into its hidden face a of water cooling or heating system by means of capillary sections of small-diameter polypropylene or copper pipes.

### FIELD OF APPLICATION

The application of the invention is intended for roofs, walls, outer walls, roof sheetings and wall sheetings, with the aim of achieving a thermal conditioning.

### BACKGROUND OF THE INVENTION

Conditioning systems by radiant surfaces are currently resolved by cold or hot water supply systems, or by heating foil (electrical resistance by Joule effect) in the case of making only a heating system.

The water supply systems are mainly performed by thick pipe with 10, 12, 16 or 20 mm thick, applied in floors or walls. Circuits of pipes with approximately 100 to 150 meters length embedded in its entire length by a layer of cement mortar (usually 6 cm thick), with special plasticizers additives to facilitate they wrap the entire pipe surface, and facilitate the thermal transmission to the pavement material or surface finish material, are made. The thick pipe system requires a previous time before coming into operation, since the cement mortar must be initially heated or cooled.

The heating foil system consists of two sheets or layers of polyester self-extinguishing and thermal-sealed to each other without any type of adhesive. The foil is connected to a electrical power supply by conductors, the heat emission being performed by means of internal graphite smoke sheets which are those attached to conductors.

Among the hot water conditioning systems, there are thick pipe systems and polypropylene or copper capillary pipe systems, with internal diameters of approximately 3 millimeters.

The capillary pipe systems have a series of thin pipes in parallel spaced approximately 8 millimeters. Said pipes pull out from a flow header pipe with a larger diameter, and end in a return header pipe with the same diameter. In this way, sections based on capillary pipes in parallel, with a variable surface depending on the geometry to be taken, are made. These can be custom-made to be arranged on any support or architectural element, or they can standardize to be applied in removable false ceilings. Through the sections circulates hot or cold water from cooling units, boilers, etc..

The effectiveness of the energy exchange of the capillary pipe systems is much higher compared to the thick pipe systems, mainly due to having a greater total exchange surface and a smaller- thickness pipes, being necessary to wait a shorter time to achieve the required conditioning.

In this way, the capillary pipe system enters radiation conditioning regimen in less than ten minutes, while in the case of the thick pipe, it would be over an hour.

Unhooked false-ceiling systems with sheet metal finishes incorporating the sections of capillary pipes in the removable pieces are known. The sections of capillary pipes are connected to water distributing pipes through quick joint and flexible hose, of the type click & cool, or similar, which facilitates both the installation and replacement of parts, and maintenance.

In practice, this system is also applied with gypsum board sheeting. In this case there is initially arranged the anchored profiles to the intrados of the forging, an insulating material is placed between the profiles, then the capillary sections, trying to cover the overall breadth, so that the distribution pipes are longitudinally at the end of the forging, and finally the panels of gypsum board are screwed to the metal profiles.

Finally, there is another solution by projecting gypsum. The conditioning can be resolved first arranging the sections on the inside surface of the forging, outer wall or wall, also leaving to one side the water distribution pipes (flow and return) and later projecting gypsum as a material which covers entirely the sections and appears as finishing layer.

For all of these conditioning systems by radiant ceiling, an exchange of energy between the users and the roof surface occurs, improving the feeling of comfort. Such exchange also occurs with the rest of the surfaces of the space. the room air is cooled or heated in said surfaces (depending on the circulation of hot or cold water), more importantly with the roof, such that mild convection currents arise which contribute to maintain a constant temperature in the area of occupation in the room. It is also applied, as mentioned, in outer wall or wall, and even on curved surfaces. In the case of conditioning in summer regimen, the dehumidification of the ambient air is required regularly to avoid surface condensation on the roof, and improve the thermal comfort.

Since a few years there are small-thickness ceramic materials and with high performance in terms of mechanical resistance and very low absorption. Usually there are in wall and/or floor coverings special adhesives to secure a perfect chemical adhesion to the support, due to its low water absorption. Typical thicknesses are 3, 4 or 5 millimeters in all formats, being able to cut the piece easily with diamond tip system. In order to ensure mechanical strength where required, especially on pavements, two pieces of this material are arranged attached with butyral, thus doubling its thickness. Said pieces can be anchored to metal substructures with the usual ceramic ventilated facade systems.

The invention lies in the application of the ceramic material to the conditioning systems supplying hot or cold water, specifically for polypropylene or copper capillary pipe systems capillary pipe systems, achieving significant advantages in terms of lightness, aesthetics, cleaning and the possibility of adopting larger formats.

To date, some patents that have established an improvement of the thermal behavior of ceramics have been developed (JP 2005041741; JP 2005133337; JP 2005076419; WO 2008122677; WO 9525701), but only one utility model for application of removable thermal conditioning for ceramics coatings has been developed (ES 1 067 154) based on heating systems by heating foil applied in floors or walls. These systems are applied through Joule effect, connected to power supply. The ceramic pieces are detachable, and are dry coupled through joint system incorporated to the parts on its side.

Said system, due to its own nature of dry placement and joint with lateral system, cannot be placed on roofs or walls without the arrangement of an additional anchoring system of the radiant foils, and other anchoring system of the ceramic pieces which should be anchored to the support. In addition, it could not be carried out using large and small-thickness ceramic pieces, due to the technical difficulty of the joint, since these are pieces with a large deformation capacity, and the complexity that would require its placement and the intended assembly and disassembly operations. The large and small-thickness pieces would require other alternative anchoring systems.

On the other hand, the arrangement on floor of large and low thickness pieces, as set out in the utility model, i.e. with joint system, would not resist tensions caused by loads and overloads to which the ceramic pieces would be subjected.

Arranging the ceramic pieces, as described in the model of utility, would not be possible the placement vertically arranged on the roof, since they may not accommodate on its surface the radiant foil, since they are removable at the same time. The installation system of the heating foil would be also visible through one of the sides of the ceramic piece.

Therefore, it can be concluded that the utility model ES 1 067 154, with ceramic male-female coupled pieces, dry placed by a lateral device, cannot be applied on roof or wall for large and low-thickness ceramic pieces.

In addition to the previous patent recently it has been developed a reference to suspended false ceiling systems (WO 2009/088817 A1). This patent does not use porcelain clay as a panel material, and only refers to false ceiling systems.

### EXPLANATION OF THE INVENTION

The invention consists of a ceramic thermal conditioning panel applicable on roofs and walls, with the characteristic that it can be fixed or removable.

This panel is formed by a multi-layer structure, having a ceramic piece of porcelain clay, a capillary section of small-diameter polypropylene or copper pipes connected to water distribution pipes to carry out the thermal conditioning of spaces by radiant surfaces, attached to the ceramic piece by an adhesive interface.

Its configuration is based on the creation of panels formed by different layers that are taken down from the ceiling by means of visible or hidden metal profile systems, according to systems similar to those existing for rock wool, wood, plaster, or sheet metal part pieces. Such panels have the function of thermal conditioning by radiant surface due to the high thermal conductivity of ceramic materials, in such a way that the cold, or hot water flowing through the polypropylene or copper capillary pipes generates cold or heat to the ceramic pieces.

The panels may be horizontally arranged by a system based on metal, vertical profiles, or with another inclination off the hook by an anchoring system or reinforced by metal or similar tubular profiles for both roofs and walls.

At the same time these allow solving the finish of roofs and walls using said ceramic pieces. These are more resistant against moisture from condensation, absorption of dirt and moisture, mechanical strength, etc., than those habitually used: rock wool, wood, plaster or metal sheet. It allows giving to said roofs and walls of any color, texture or even printed image using injection technique of enamel by printer prior to the cooking of the piece.

The panel allows a thermal conditioning, through those used in radiant ceilings with capillary section systems, by incorporating ceramic pieces as cladding of interior finish, and is detachable to perform registration, maintenance, interchangeability, replacement and/or repair tasks.

The panel is structured into four main parts:
- Ceramic piece. It can be in any format, texture, thickness or shape. the ceramic piece is made of low thickness porcelain clay, specifically 3 or 4 millimeters to give it greater lightness and ease of assembly and disassembly.
- Adhesive interface of attachment between the ceramic piece and the capillary section. It consists of a adhesive material chemically compatible with the ceramics and polypropylene and/or copper, depending on the type of section available for the thermal conditioning. It is a material that favors the heat transmission, such as for example conductive paste, or similar, so that it wraps the capillary pipes in its entire surface.
- Capillary section of polypropylene or copper pipes. Said section has a surface similar to that of the ceramic piece, such that each ceramic piece has a separate section. Said section has one flow head tube and another return head tube, with a diameter suited to the total flow of the section, and are connected to the flow and return water distribution pipes by quick joint and flexible hose, of the type click & cool, or similar.
- Layer of thermal insulation. This layer has the same surface as that the ceramic piece, which is attached to this by adhesive tape on the perimeter, or application of adhesive substance which allow attaching it to the capillary section without chemical alteration, and allowing detaching it to perform maintenance tasks on the capillary section.

Panels thus formed are arranged on the metal structure that lifts the roof, or other system that allows its perfect fixation in the assembly and disassembly of these panels as stable supports. Likewise, it can be resolved by a support system that allows leaving the piece suspended while the underside of the roof is being accessed, and carry out the connection or disconnection tasks of capillary sections to the water distribution pipes (flow and return). It can be also placed on walls with anchoring systems similar to those used for gypsum board sheeting.

Said panels may also be constructed of larger pieces. La structure of the panel would be similar to the aforementioned, but it would be necessary to include a butyral adhesive between the two large ceramic pieces.

Another option would be to use large, vertically arranged pieces. The flow and return header pipes of the capillary sections would be located next to the forging to carry out the connection to the water distribution pipes.

### BRIEF DESCRIPTION OF THE DRAWINGS

**Figure 1** shows the detailed structure of the panel:
- Ceramic piece 1
- Capillary section of polypropylene or copper pipes 2
- Conductive paste-type adhesive interface 3
- Thermal insulation 4. Rigid or flexible, plastic foam-type.

**Figure 2** shows the standard embodiment of the panel, with the structure in all its layers, and the section that is suspended from the roof for standard systems of removable false ceilings.

**Figure 3** shows an embodiment of the invention for formats of larger pieces, as described in the Example 1. Its numbered parts from 1 to 4 are similar to those of the Figure 1, but a butyral adhesive is included for two large ceramic pieces:
- Ceramic piece 1
- Capillary section of polypropylene or copper pipes 2
- Conductive paste-type adhesive interface 3
- Thermal insulation 4. Rigid or flexible, plastic foam-type
- Polyvinyl butyral 7, or similar for attaching the two ceramic pieces.

**Figure 4** shows another embodiment of the invention described in Example 2:
- Ceramic piece 1. It could be arranged one or two attached by a butyral.
- Capillary section of polypropylene or copper pipes 2
- Thermal insulation 4. Rigid or flexible, plastic foam-type
- Tubular metal profiles 6, or omega-type or similar to those used for gypsum board sheetings on which the ceramic pieces will be supported or screwed.

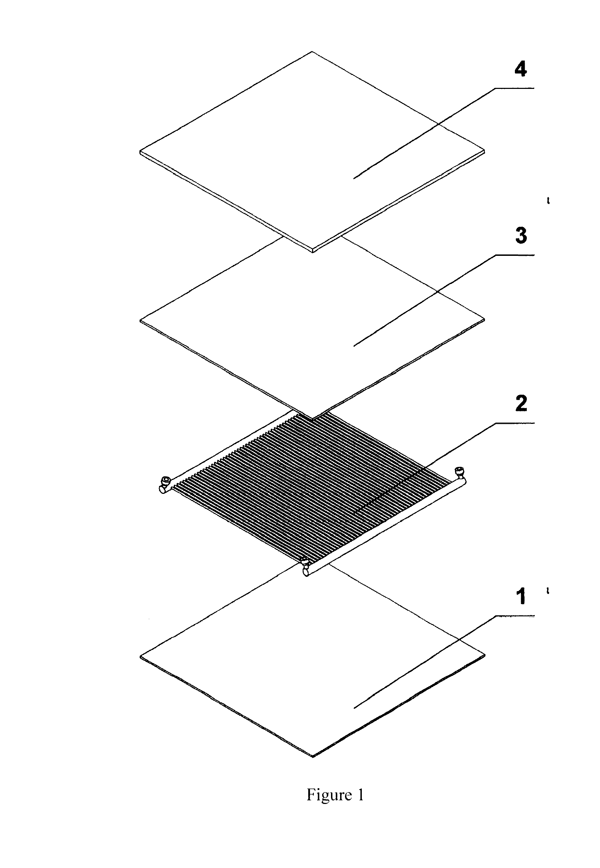

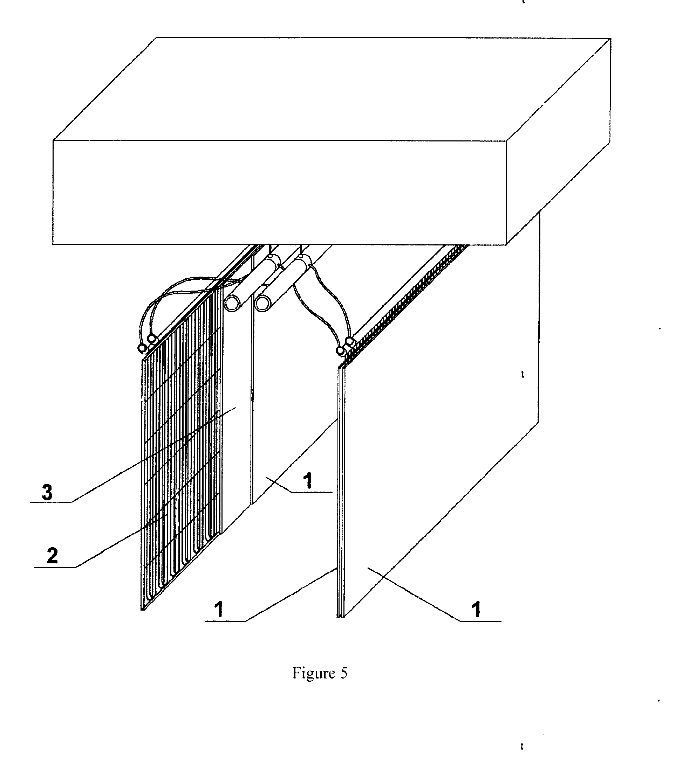

**Figure 5** shows an embodiment of the invention described in Example 2 with large, vertically arranged pieces. The flow and return header pipes of the capillary sections are next to the forging to carry out the connection to the water distribution pipes. Its numbered parts from 1 to 3 are similar to those of the Figure 1.

### DESCRIPTION OF THE INVENTION IN ITS DIFFERENT FORMS

The invention relates to a ceramic thermal conditioning panel applicable on roof or wall, associated with a cooling or heating system that uses hot or cold water circulating through the capillary section of polypropylene or copper pipes. This combination, taking into account the lightness of the new ceramic materials, the low thickness and high coefficient of heat transmission, is ideal to solve roof claddings involving thermal conditioning by radiant surfaces.

This invention, in addition to the panel systems already mentioned, can be carried out in various ways:

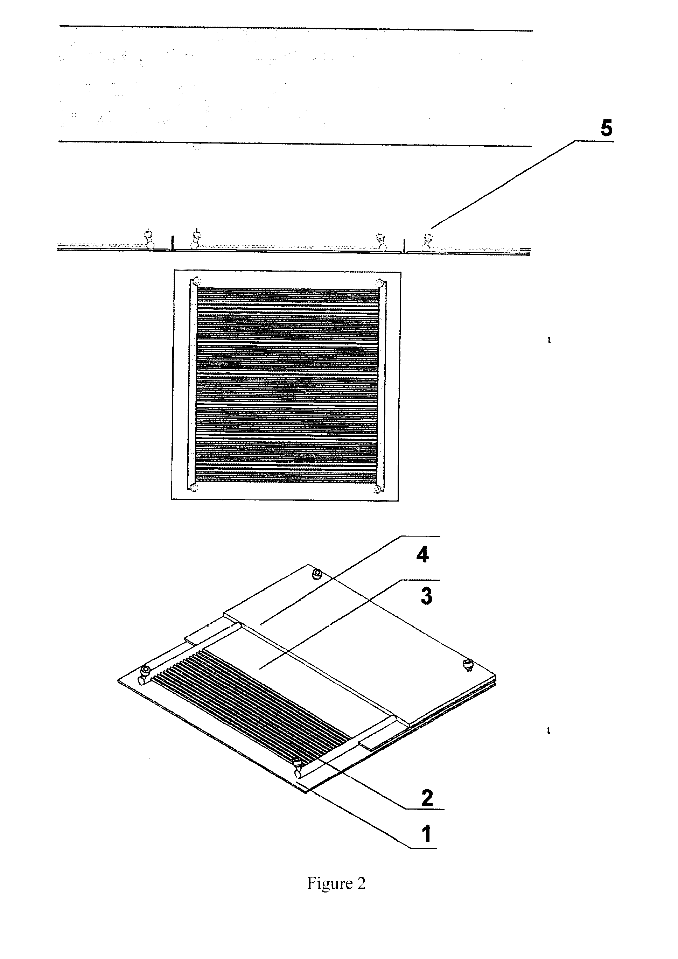

### Example 1 (see Figures 1 and 2)

It is the basic combination of the invention, wherein there are arranged panels formed by a ceramic piece 1 of low thickness porcelain clay to which a capillary section of polypropylene or copper pipes 2 of the same approximate surface that the ceramic piece, that adheres to said ceramic piece by conductive paste-type interface 3, or similar, of about 5 millimeters thick, has been added. Finally, there is a layer of thermal insulation 4 over its entire surface, so that the section of capillary pipes and its header pipes are totally covered. It will be preferable a thermal insulation of the type of flexible plastic foam with a thickness between 5 millimeters and 10 millimeters. Said insulation has the secondary function of protecting the sections against the dirt and other possible chemical actions. This insulation may not be arranged in the case of verifying by calculation, that the energy dissipation into the chamber formed with the forging is negligible.

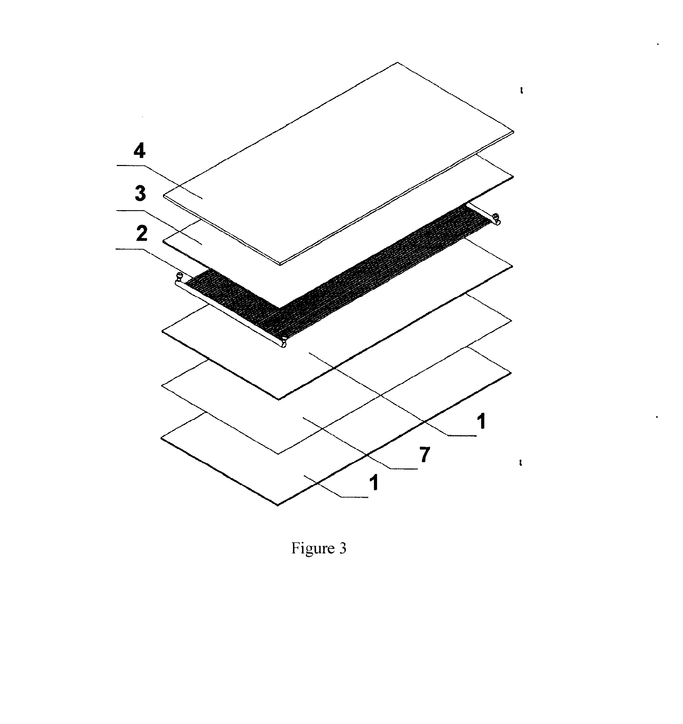

### Example 2 (see Figure 3)

It is a particular embodiment of the invention wherein, in order to be able to adopt larger formats of cutting of the false ceiling, there are arranged two ceramic pieces 1 of porcelain clay of 3 millimeters thick joined by a butyral 7 over its entire surface, as adhesive interface. In this way, the ceramic pieces acquire greater strength and rigidity, significantly reducing its arrow (subjected to bending), when arranged on the unhooking metal structure 5 of the roof, or another system that allows a perfect fixation in the assembly and disassembly of said panels as a stable supports, as explained in the object of the invention. They could be also placed on walls with anchoring systems similar to those used for gypsum board sheetings.

To the pieces, a capillary section of polypropylene or copper pipes 2 of the same approximate surface that the ceramic piece, that adheres by conductive paste-type adhesive interface 3, or similar, of about 5 millimeters thick, adheres.

Finally, there is a layer of thermal insulation 4 over its entire surface, so that the section of capillary pipes and its header pipes are totally covered. It will be preferable a thermal insulation of the type of flexible plastic foam with a thickness between 5 millimeters and 10 millimeters. Said insulation has the secondary function of protecting the sections against the dirt and other possible chemical actions. This insulation, as in the previous example, may not be arranged in the case of verifying by calculation, that the energy dissipation into the chamber formed with the forging is negligible.

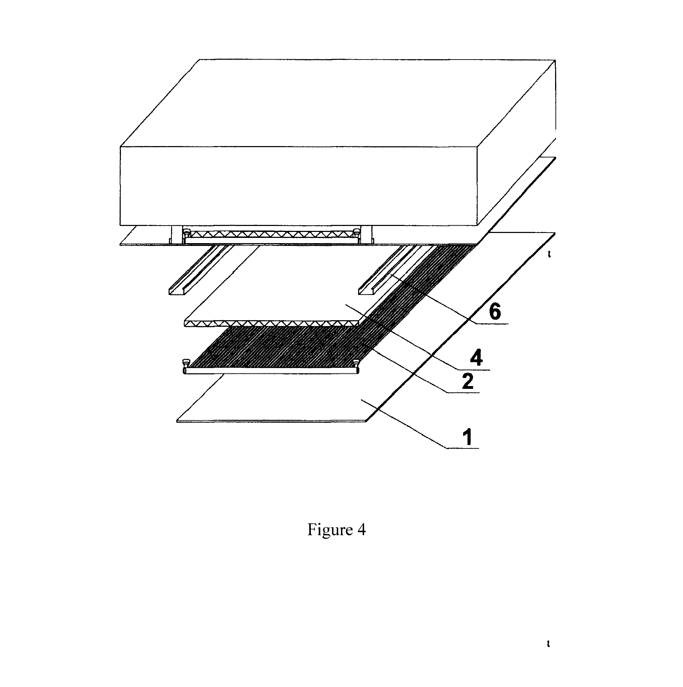

### Example 3 (see Figure 4)

It is a particular embodiment of the invention, wherein are firstly arranged a series of metal profiles 6 anchored to the forging intrados or to the wall, among these a layer of thermal insulation 4 which can be of different materials, rigid panels, foams or shotcrete. Next the capillary section of polypropylene or copper pipes 2 is arranged between the metal profiles, anchored to the insulating material. Finally, ceramic pieces 1 of porcelain clay of any format and thickness, are anchored to the structure of metal profiles by systems of hidden anchorage, visible anchorage or screw fixing. They will be removable for disassembly and maintenance tasks. As above, the insulation may not be arranged in the case of verifying by calculation, that the energy dissipation into the chamber formed with the forging is negligible.

### Example 4 (see Figure 5)

It is a particular embodiment of the invention, wherein there are large format panels, formed by two ceramic pieces 1 of porcelain clay with 3 mm thick, between which a capillary section of polypropylene or copper pipes 2 of the same approximate surface that the ceramic pieces, and a conductive paste-type adhesive interface 3, or similar, interior of 5 millimeters thick, are arranged, such that the capillary section of polypropylene or copper pipes 2 is completely embedded in the interface. In this case, being an assembly *in situ,* it would be more appropriate the use of a rigid thermal insulation 8. The total thickness of the panel is 11 millimeters. The flow and return header pipes of the section are left to one side of the piece. Said pieces are arranged vertically or inclined, hanging of the forging through a substructure designed for this purpose. In this way, the performance or effectiveness of the thermal conditioning of the room is improved.

## Claims

1. Ceramic thermal conditioning panel for thermal conditioning of spaces by radiant surfaces on roofs and walls, comprising a multi-layer structure, consisting of at least a ceramic piece of porcelain clay and a capillary section of small-diameter polypropylene or copper pipes connected to water distribution pipes.

2. Ceramic thermal conditioning panel according to claim 1, where the ceramic piece of porcelain clay has a low thickness.

3. Ceramic thermal conditioning panel according to claim 1, where an adhesive interface for attaching the capillary section of polypropylene or copper pipes to the ceramic piece is incorporated.

4. Ceramic thermal conditioning panel according to claim 1, where it is incorporated a layer of thermal insulation.

5. Ceramic thermal conditioning panel according to claim 1 for large ceramic pieces, comprising two pieces of porcelain clay joined to each other by a butyral.

6. Ceramic thermal conditioning panel according to claim 3, where the porcelain clay is 3 mm thick.

7. Ceramic thermal conditioning panel according to claim 1 or 3, for placement in a vertical or inclined position, where it comprises at least one ceramic piece on each of its faces.
